# EUROPÄISCHE PATENTSCHRIFT

(11) **EP 1 081 423 B1**
(45) Veröffentlichungstag und Bekanntmachung des Hinweises auf die Patenterteilung: **28.03.2001**
(21) Anmeldenummer: 99116085.4
(22) Anmeldetag: 17.08.1999
(51) Int. Cl.: F16L 13/14, F16L 21/03

(54) **Verfahren und Formteil zum Herstellen einer Pressverbindung zwischen einem Fitting und einem in die Aufnahme des Fittings eingeschobenen Rohrende**
Method and preformed part for manufacturing a press-fitting connection between two pipes
Procédé et pièce préformée pour la fabrication d'un raccord à compression entre deux tuyaux

(43) Veröffentlichungstag der Anmeldung: 07.03.2001
(73) Patentinhaber: Franz Viegener II GmbH & Co. KG., 57439 Attendorn (DE)
(72) Erfinder: Viegener, Walter, 57439 Attendorn (DE)
(74) Vertreter: Stracke, Alexander, Dipl.-Ing.

(56) Entgegenhaltungen:
- EP-A- 0 343 395
- EP-A- 0 870 964
- DE-A- 19 637 688

## Beschreibung

Die Erfindung bezieht sich auf ein Verfahren zum Herstellen einer Preßverbindung zwischen einem Anschlußstutzen eines Fittings oder einer Armatur und einem mit einer mit einem Dichtungsring versehene Aufnahme des Fittings bis zu einem Anschlag eingeschobenen Rohrende unter Verwendung eines im Bereich einer den Dichtungsring teilweise aufnehmenden Ringwulst des Fittings angreifenden Preßwerkzeuges.

Die Erfindung betrifft ferner ein in die Aufnahme des Fittings bei der Durchführung des Verfahrens einsetzbares Formteil.

Vor dem Einführen des Rohrendes in die Aufnahme wird der Dichtungsring in eine nach innen geöffnete Verankerungsnut eingesetzt, die durch eine wulstartige Verformung des Fittings gebildet wird. Nach dem Einführen des Rohrendes in die Aufnahme des Fittings umschließt der Dichtungsring das eingeführte Rohrende.

Da das Rohrende an der Stirnfläche mit scharfen Kanten versehen sein kann, besteht die Gefahr, daß beim Einschieben des Rohrendes in den Fitting der Dichtungsring beschädigt und seine Dichtwirkung beeinträchtigt wird.

Die DE 196 37 688 offenbart eine Rohrverbindung, bei der zwischen einem Leitungsrohr und einem Pressfitting neben der Umhüllung des Rohres eine Stützhülse vorgesehen sein kann. Die Umhüllung wird dabei im Endbereich nicht abgemantelt, sondern vor dem Einschieben in den Preßfitting wird eine Außenstützhülse auf den Endbereich aufgeschoben. Diese Außenstützhülse ist ebenfalls aus dem gleichen Werkstoff gefertigt wie der Pressfitting und das dünnwandige Leitungsrohr, wobei in dem Pressfitting ein Dichtungsring vorgesehen ist, der nach dem Verpressen abdichtend an der Stützhülse anliegt.

Der Erfindung liegt die Aufgabe zugrunde, ein Verfahren der eingangs genannten Art so zu gestalten, daß beim Einschieben des Rohrendes in den Fitting der in eine ringförmige Verankerungsnut eingelegte Dichtungsring durch die scharfen stirnseitigen Außenkanten des Rohrendes nicht beschädigt und beim Verpressen der zu verbindenden Teile die notwendige Dichtigkeit erhielt wird.

Diese Aufgabe wird erfindungsgemäß dadurch gelöst, daß vor dem Einschieben des Rohrendes oder während des Einschiebens des Rohrendes in die Aufnahme des Fittings der Dichtungsring von der Innenkontur aus durch mindestens ein eingesetztes Formteil elastisch verformt wird, das Rohrende bis zum Anschlag eingeschoben und die Kaltverformung der zu verbindenden Teile vorgenommen wird.

Durch das oder durch die in die Aufnahme des Fittings vor, mit oder nach der Montage des Dichtungsrings eingeführte Formteil bzw. eingeführten Formteile wird der Dichtungsring aus dem Bewegungsbereich des Rohrendes bewegt, so daß etwaige scharfe, stirnseitige Kanten des Rohrendes, die aus einem nicht entfernten Grat bestehen können, nicht mit dem Dichtungsring in Berührung kommen können.

Bei den Rohren, die mit dem Fitting durch eine Kaltverformung verbunden werden, handelt es sich im allgemeinen vorrangig um Metallrohre, die z.B. aus Edelstahl oder Kupfer bestehen. Kunststoff- und Verbundrohre sind ebenfalls denkbar.

Die in die Aufnahme des Fittings bzw. in die Verankerungsnut des Dichtungsringes eingesetzten Formteile sind vorzugsweise aus Kunststoff gefertigt.

Andere Materialien aus Metall oder sonstigem Material, das den Anforderungen genügt, sind auch möglich.

Weitere Ausgestaltungen der Erfindung ergeben sich aus den Unteransprüchen. Ausführungsbeispiele des Verfährens und der in die Aufnahme des Fittings oder in die Verankerungsnut des Dichtungsrings einzusetzende Formteile sind in den Zeichnungen dargestellt.

Es zeigen:
- Figur 1: einen Fitting mit eingeführtem Rohrende und eingesetztem Formteil im Schnitt vor der Verpressung,
- Figur 2: die Ausführung nach der Figur 1 in perspektivischer Darstellung,
- Figur 3: eine Abwandlungsform im Schnitt,
- Figur 4: einen Fitting mit eingeschobenem Rohrende und einem ringförmigen in die Verankerungsnut des Dichtungsringes eingesetzten Formteil vor dem Verpressen,
- Figuren 5 und 6: zwei Ausführungsbeispiele des in die Verankerungsnut des Dichtungsringes eingesetzten Ringe zum Abheben des Dichtungsringes von dem eingeführten Rohr,
- Figur 7: eine Ausführung, bei der in der Verankerungsnut dem Dichtungsring ein Spannring zugeordnet ist,
- Figur 8: den Spannring nach der Figur 7 im Grundriß,
- Figur 9: eine Abwandlungsform zu der Ausführung nach der Figur 7,
- Figur 10: einen Fitting mit eingesetztem Dichtungsring und eingeschobenem Metallrohr im Schnitt, wobei in der Verankerungsnut zu beiden Seiten des Dichtungsringes je ein Ring vorgesehen ist, die den Dichtungsring vom Rohr wegdrücken,
- Figur 11: eine Ausführungsform, die weitgehend der Figur 10 entspricht, bei der jedoch die dem Dichtungsring zugeordneten Ringe als Formring ausgebildet sind,
- Fig. 12 und 13: Formteile, die in die Verankerungsnut eingesetzt sind und zwei Anlagen für den Dichtungsring aufweisen, wobei diese Anlagen durch eine dünne Wandung miteinander verbunden sind, die bei der Verpressung einen Sollbruchbereich bildet,
- Figur 14: ein in die Verankerungsnut für den Dichtungsring eingesetztes, im Querschnitt keilförmiges Formteil, durch das der Dichtungsring vom Metallrohr abgehoben wird,
- Figur 15: eine als Hülse ausgebildetes Formteil im Schnitt, das mit einem Sollbruchbereich versehen ist, dessen Breite der Breite des Dichtungsringes entspricht,
- Fig. 16 und 17: Montageschritte beim Einführen des Rohrendes in die Aufnahme des Fittings unter Verwendung der Hülse nach der Figur 15.

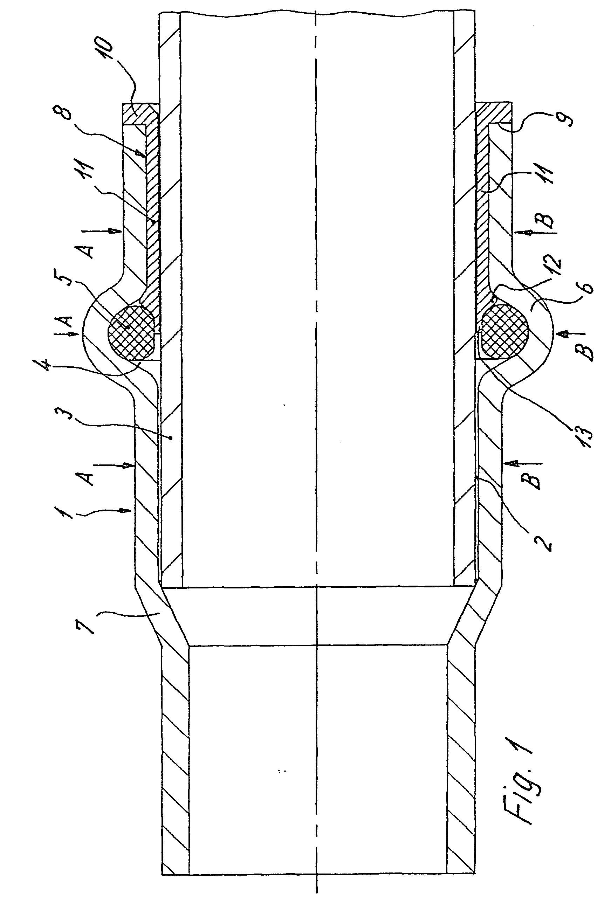

In der Figur 1 ist ein Fitting 1 im Schnitt dargestellt, der eine Aufnahme 2 für ein Rohrende 3 aufweist und mit einer Verankerungsnut 4 für einen Dichtungsring 5 versehen ist. Die Verankerungsnut 4 wird durch eine wulstartige Verformung 6 des Fittings gebildet.

In dem dargestellten Ausführungsbeispiel wird die Aufnahme 2 durch ein konisch sich verjüngendes Teil 7 begrenzt, das für das Rohrende 3 einen Anschlag bildet.

In die Aufnahme 2 ist ein Formteil 8 aus Kunststoff eingesetzt, durch das der Dichtungsring von der Außenfläche des Rohrendes 3 abgehoben wird. Das Einführen des Rohrendes in die Aufnahme 2 erfolgt erst nach dem Einsetzen des Formteils 8. Hierdurch wird sichergestellt, daß scharfe Kanten im Bereich der Stirnfläche des Rohres, bei dem z.B. das Entgraten vergessen wurde, den Dichtungsring 5 nicht beschädigen können.

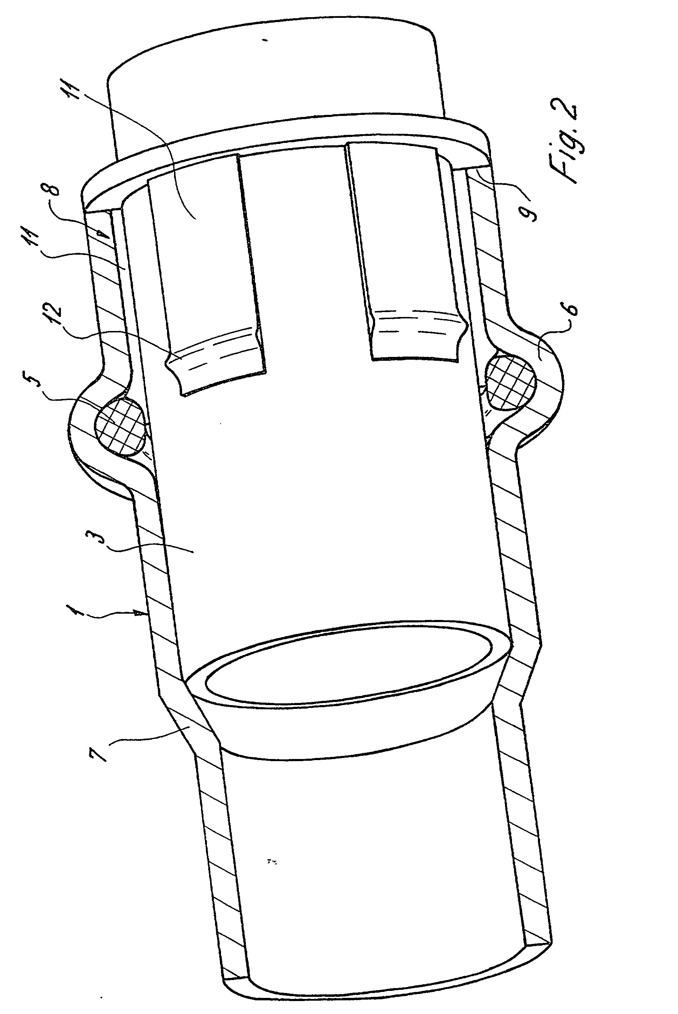

Der konstruktive Aufbau des Formteils 8 ergibt sich aus den Figuren 1 und 2.

Das Formteil 8 weist einen an der Stirnfläche 9 des Fittings 1 sich abstützenden, nach außen ragenden Ringflansch 10 auf, von dem sich Ringsegmente 11 erstrekken. Diese Ringsegmente 11 sind mit einer Aufkantung 12 versehen, die in die Verankerungsnut 4 für den Dichtungring 5 ragt und an der Nutinnenfläche anliegt. Von der Aufkantung 12 erstreckt sich jeweils eine dünnwandige Zunge 13, die den Dichtungsring 5 bis zur Hälfte untergreift. Die Ringsegmente 11 liegen an der Innenfläche der Aufnahme 2 des Fittings und an der Außenfläche des Rohrendes 3 an.

Die Verpressung des Fittings 1 mit dem Rohrende 3 wird durch ein Preßwerkzeug durchgeführt und erfolgt in Richtung der Pfeile A und B im Bereich des Wulstringes 6 und benachbart dieses Wulstringes.

Der Teil des Dichtungsringes, der von den Zungen 13 nicht untergriffen wird, wird im Zuge der Verpressung auf die Außenfläche des Rohrendes 3 gedrückt, wobei eine ausreichende Dichtigkeit zwischen den genannten Funktionsteilen erreicht wird.

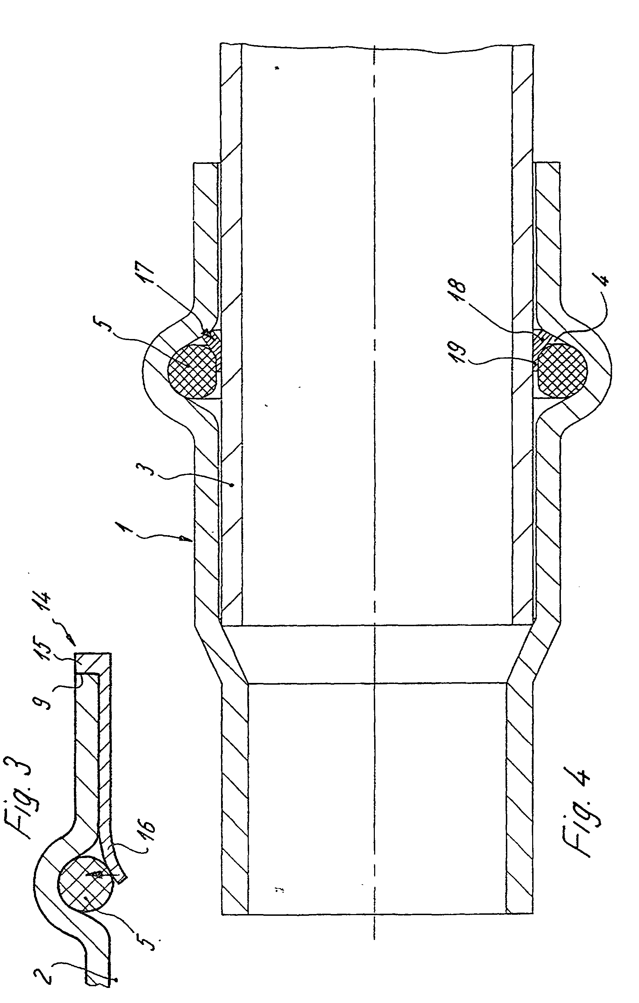

In der Figur 3 ist ein Formteil 14 dargestellt, das einen nach außen sich erstreckenden Ringflansch 15 aufweist, der sich nach dem Einführen des Formteils in die Aufnahme 2 des Fittings 1 an der Stirnfläche 9 des Fittings anlegt. Von dem Ringflansch erstrecken sich Stege 16, die sich an der Innenkontur des Dichtungsringes abstützen. Die Stege werden dabei so nach innen verformt, daß sie in den Bewegungsweg des Rohrendes 3 ragen, das in die Aufnahme 2 eingeschoben wird. Durch das Rohrende, das in die Aufnahme 2 des Fittings eingesteckt wird, werden somit die Stege 16 und der Dichtungsring 5 verformt und es wird sichergestellt, daß das Rohrende nicht mit dem Dichtungsring 5 in Berührung kommt.

Die Stege 16 stützen sich am Dichtungring 5 in einem Bereich bis zur halben Ringbreite ab. Dadurch wird gewährleistet, daß beim Verpressen des Fittings 1 mit dem eingeschobenen Rohrende ein wesentlicher Teil des Dichtungsringes sich unmittelbar an der Außenwandung des Rohrendes abstützen kann, so daß eine ausreichende Dichtigkeit zwischen den zusammengefügten Teilen erreicht wird.

Bei dem Ausführungsbeispiel nach den Figuren 4 bis 6 ist das Formteil, das den Dichtungsring 5 gegenüber dem Metallrohrende 3 abhebt, als geteilter Ring 17 ausgebildet. Dieser Ring weist im Querschnitt zwei Schenkel 18,19 auf, die einen stumpfen Winkel bilden. Der Schenkel 19 untergreift den Dichtungsring 5 bis zur Hälfte der Ringbreite, während der andere Schenkel 18 sich an der Wandung der Verankerungsnut 4 abstützt.

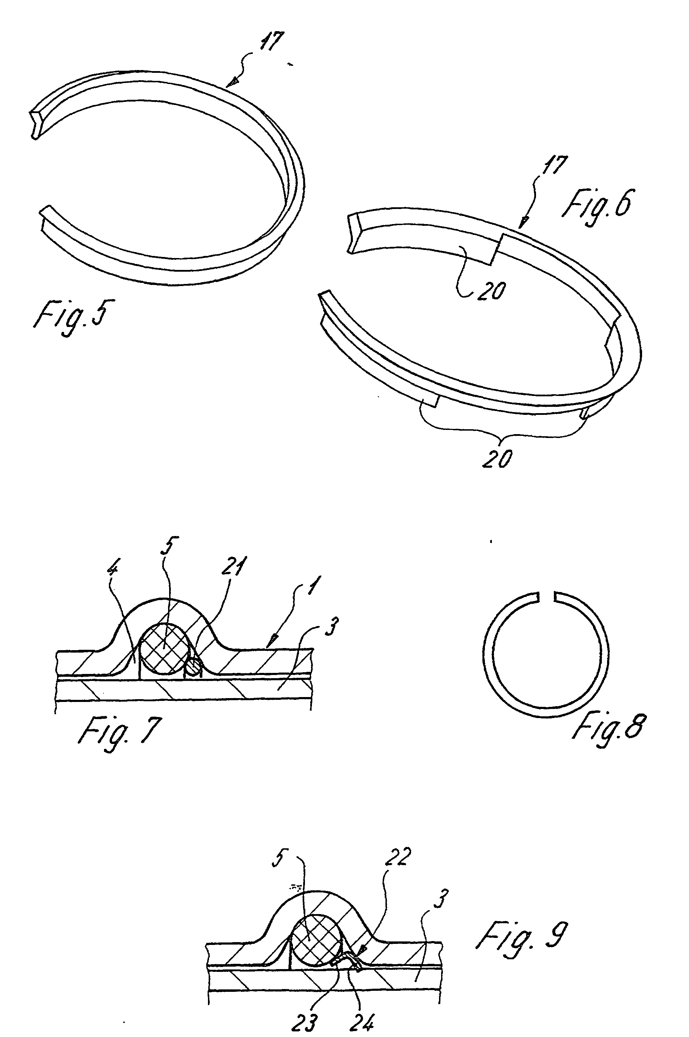

Bei dem geteilten Ring nach der Fig. 6 werden die den Dichtungsring 5 untergreifenden Schenkel durch Ringsegmente 20 gebildet.

Das Formteil, durch das der Dichtungsring 5 in der Verankerungsnut 4 des Fittings 1 vom Bewegungsbereich des Rohrendes 3 weggedrückt wird, ist bei dem Ausführungsbeispiel nach den Figuren 7 und 8 als Spannring 21, und zwar als O-Ring gestaltet, der entsprechend der Darstellung in der Fig. 8 an einer Stelle geteilt ist.

Es kann, wie aus der Fig. 9 zu entnehmen ist, ein geteilter Formring 22 verwendet werden, der einen winkelförmigen Querschnitt aufweist. Ein Schenkel 23 stützt sich am Dichtungsring 5 ab, während der andere Schenkel 24 in den Bewegungsweg des einzuschiebenden Rohrendes 3 ragt, so daß beim Einschieben des Rohrendes der Formring 22 nach außen gedrückt wird und mit seinem Schenkel 23 den Dichtungsring vom Bewegungsbereich des Rohrendes fernhält.

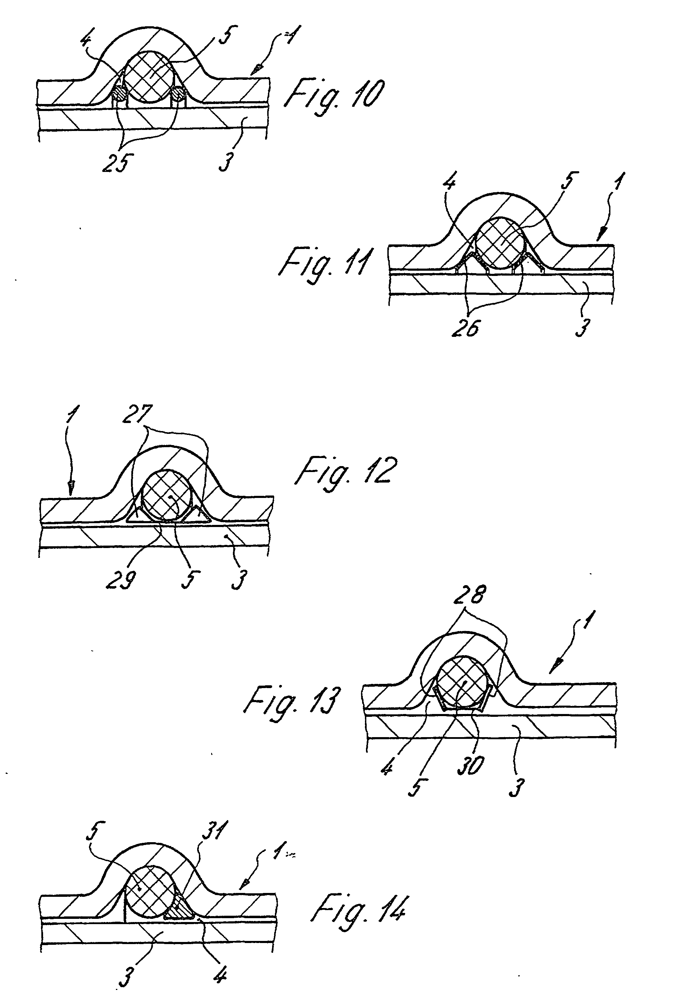

Aus den Figuren 10 und 11 ergibt sich, daß zu beiden Seiten des Dichtungsringes 5 in die Verankerungsnut 4 geteilte Spannringe 25 oder geteilte Formringe 26 eingesetzt werden können.

Diese Ringe 25 und 26 werden beim Verpressen des Fittings 1 mit dem Rohrende 3 zur Seite geschoben, so daß der Dichtungsring 5 unmittelbar auf die Außenfläche des Rohrendes 3 gepreßt wird.

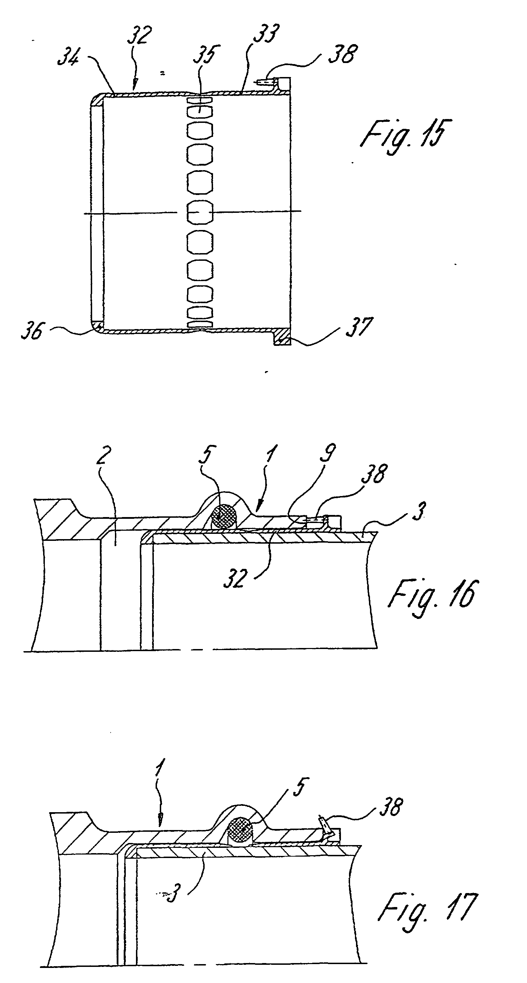

In den Figuren 12 und 13 sind Formteile dargestellt, die in die Verankerungsnut 4 des Fittings 1 eingesetzt werden und seitliche Anlagen 27 bzw. 28 für den Dichtungsring 5 aufweisen. Diese Anlagen sind über eine dünne Wandung 29, 30 miteinander verbunden. Diese dünnen Wandungen bilden Sollbruchstellen bei der Verpressung des Fittings mit dem Rohrende 3. Nach der Zerstörung dieser dünnen Wandungen kann der Dichtungsring 5 auf die Außenfläche des Rohrendes 3 gedrückt werden, so daß die angestrebte Dichtigkeit zwischen dem Fitting und dem eingesteckten Rohrende erreicht wird.

Aus der Figur 14 ergibt sich, daß das Formteil zum Abheben des Dichtungsrings 5 aus dem Bewegungsbereich des Rohrendes 3 beim Einschieben des Rohrendes in die Aufnahme 4 des Fittings 1 als Keil 31 ausgebildet sein kann, der als Ringsegment gestaltet ist.

Bei dem Ausführungsbeispiel nach den Figuren 15 bis 17 ist das Formteil, das in die Aufnahme 2 des Fittings 1 eingesetzt wird, als Hülse 32 ausgebildet, die aus den Hülsenteilen 33 und 34 besteht, die über einen Sollbruchbereich 35 zunächst miteinander verbunden sind. Die Breite des Sollbruchbereichs entspricht der Breite des Dichtungsringes 5.

Die Hülse 32 ist am vorderen Ende mit einem nach innen ragenden Ringflansch 36 ausgerüstet, der sich an der Stirnfläche des Rohrendes 3 abstützt, nachdem die Hülse auf das Rohrende gestützt wurde.

Das Rohrende wird mit der aufgesetzten Hülse 32 in die Aufnahme 2 des Fittings 1 eingeführt.

Am hinteren Ende der Hülse 32 ist ein nach außen ragender Ringflansch 37 vorgesehen, der an der dem Fitting zugewandten Seite mit einem Zapfen 38 ausgestattet ist.

Der erste Montageschritt ist in der Figur 16 dargestellt, die zeigt, daß die Hülse 32 zusammen mit dem Rohrende 3 zunächst so weit in die Aufnahme 2 des Fittings 1 eingeschoben wird, bis der Zapfen 38 an der Stirnfläche 9 des Fittings 1 anliegt. Am Ende dieser Montagebewegung ist die Hülse 32 noch in der zusammenhängenden Raumform, die in der Figur 15 aufgezeigt ist. Bei einer Fortsetzung der Einschubbewegung des Rohrendes 3 wird die Hülse 32 im Sollbruchbereich 35 getrennt, so daß ausschließlich das Hülsenteil 34 zusammen mit dem Rohrende in die Endstellung bewegt wird, die in der Fig. 17 aufgezeigt ist.

Bei der Auftrennung des Sollbruchbereichs 35 stellt sich der Zapfen 38 nach oben auf und nimmt die in der Figur 17 dargestellte Lage ein. Diese Lage zeigt dem Monteur, daß die Hülse 32 im Bereich der Sollbruchstelle getrennt ist.

Durch diese Trennung wird ein Freiraum im Bereich der Hülse 32 für den Dichtungsring 5 geschaffen, so daß beim Verpressen des Fittings 1 mit dem Rohrende 3 der Dichtungsring 5 unmittelbar mit der Außenfläche des Rohrendes 3 verpreßt werden kann. Hierdurch wird die zwischen den Teilen geforderte Dichtigkeit erreicht.

### Bezugszeichenliste

- 1: Fitting
- 2: Aufnahme
- 3: Rohrende
- 4: Verankerungsnut
- 5: Dichtungsring
- 6: Verformung
- 7: 7 Teil
- 8: 8 Formteil
- 9: Stirnfläche
- 10: Ringflansch
- 11: Ringsegment
- 12: Aufkantung
- 13: Zunge
- 14: Formteil
- 15: Ringflansch
- 16: Steg
- 17: Ring
- 18: Schenkel
- 19: Schenkel
- 20: Ringsegment
- 21: Spannring
- 22: Formring
- 23: Schenkel
- 24: Schenkel
- 25: Spannring
- 26: Formring
- 27: Anlage
- 28: Anlage
- 29: Wandung
- 30: Wandung
- 31: Keil
- 32: Hülse
- 33: Hülsenteil
- 34: Hülsenteil
- 35: Sollbruchbereich
- 36: Ringflansch
- 37: Ringflansch
- 38: Zapfen

## Patentansprüche

1. Verfahren zum Herstellen einer Preßverbindung zwischen einem Fitting und einem in eine mit einem Dichtungsring versehene Aufnahme des Fittings bis zu einem Anschlag eingeschobenen Rohrende unter Verwendung eines im Bereich einer den Dichtungsrichtung teilweise aufnehmenden Ringwulst des Fittings angreifenden Preßwerkzeuges, **dadurch gekennzeichnet**, **daß** vor dem Einschieben des Rohrendes (3) oder während des Einschiebens des Rohrendes (3) in die Aufnahme (2) des Fittings (1) der Dichtungsring (5) von der Innenkontur aus durch mindestens ein eingesetztes Formteil bereichsweise über den Außenumfang des Rohrendes (3) in radialer Richtung elastisch verformt wird, das Rohrende (3) bis zum Anschlag eingeschoben, die Kaltverformung der zu verbindenden Teile vorgenommen wird und bei der Kaltverformung der Dichtungsring auf das Rohrende (3) gepreßt wird.

2. Verfahren nach Anspruch 1, **dadurch gekennzeichnet, daß** als Formteil ein oder mehrere Ringe, Ringsegmente, eine Hülse, Keile oder Stege verwendet werden.

3. Verfahren nach Anspruch 2, **dadurch gekennzeichnet, daß** der Ring, die Ringsegmente oder Stege, die den Dichtungsring (5) von der Außenfläche des Rohrendes (3) abheben, bis etwa in den mittleren Bereich des Dichtungsrings oder Formdichtung (5) in die Aufnahme (3) des Fittings (1) eingeführt werden.

4. Verfahren nach Anspruch 3, **dadurch gekennzeichnet, daß** beim Verpressen des Fittings (1) mit dem eingeschobenen Rohrende (3) etwa eine Hälfte des Dichtungsringes mit dem Rohrende unmittelbar verpreßt wird.

5. Verfahren nach Anspruch 2, **dadurch gekennzeichnet, daß** die in die Aufnahme (2) des Fittings (1) einzusetzende Hülse (32) mit einem nach innen sich erstreckenden Ringflansch (36) sich an der Stirnseite des Rohrendes (3) abstützt und zunächst mit dem Rohrende bis zu einem Anschlag an der Stirnseite (9) des Fittings eingeführt, anschließend im Bereich des Dichtungsringes getrennt wird und der vordere Hülsenteil (34) mit dem Rohrende (3) bis zu einem Anschlag am Fitting (1) in die Aufnahme (2) bewegt wird.

6. Verfahren nach Anspruch 5, **dadurch gekennzeichnet, daß** der Trennbereich zwischen den Hülsenteilen (33, 34) der Breite des Dichtungsrings (5) entspricht und der Dichtungsring auf seiner gesamten Breite oder nahezu auf seiner gesamten Breite mit dem Rohrende (3) verpreßt wird.

7. Verfahren nach Anspruch 1, **dadurch gekennzeichnet, daß** das in die Aufnahme (2) des Fittings (1) eingesetzte Formteil an einem Teil der Innenkontur des Dichtungsringes (5) sich abstützend in den Bewegungsbereich des einzuführenden Rohrendes (3) ragt und beim Einführen des Rohrendes (3) der Dichtungsring (5) aus dem Bewegungsbereich des Rohrendes bewegt wird.

8. Verbindungsanordnung zur Durchführung des Verfahrens nach einem der Ansprüche 1 bis 7, mit einem Fitting (1) und einem in eine mit einem Dichtungsring (5) versehene Aufnahme des Fittings (1) bis zu einem Anschlag eingeschobenen Rohrende (3), **dadurch gekennzeichnet, daß** zum Schutz des Dichtungsringes (5) beim Einschieben des Rohrendes (3) mindestens ein eingesetztes Formteil vorgesehen ist, das den Dichtungsring (5) bereichsweise über den Außenumfang des Rohrendes (3) in radialer Richtung elastisch verformt.

9. Verbindungsanordnung nach Anspruch 8, **dadurch gekennzeichnet, daß** sich ein Ringflansch (10) an der Stirnfläche (9) des Fittings (1) abstützt, von dem sich Ringsegmente (11) erstrecken, die mit einer Aufkantung (12) in die Verankerungsnut (4) des Fittings für den Dichtungsring (5) eingreifen und an der Nutinnenfläche anliegen, und daß von der Aufkantung dünnwandige Zungen ausgehen, die den Dichtungsring (5) bis zur Hälfte untergreifen.

10. Verbindungsanordnung nach Anspruch 9, **dadurch gekennzeichnet, daß** die Ringsegmente (11) an der Innenfläche der Aufnahme (2) des Fittings (1) und an der Außenfläche des Rohrendes (3) anliegen.

11. Verbindungsanordnung nach Anspruch 10, **dadurch gekennzeichnet, daß** sie einen an der Stirnfläche (9) des Fittings (1) sich abstützenden Ringflansch (15) aufweist, von dem sich Stege erstrecken, die sich an der Innenkontur des Dichtungsringes (5) in einem Bereich bis zur halben Ringbreite abstutzen und im Zusammenwirken mit dem Dichtungsring (5) in den Bewegungsbereich des einzusetzenden Rohrendes (3) geformt sind.

12. Verbindungsanordnung nach Anspruch 11, **dadurch gekennzeichnet, daß** sie als ein in die Verankerungsnut (4) des Dichtungsringes (5) eingesetzter, geteilter Ring (17) ausgebildet ist, der im Querschnitt zwei Schenkl (18, 19) aufweist, die einen stumpfen Winkel bilden und von denen ein Schenkel (19) den Dichtungsring (5) bis zur Hälfte untergreift und der andere Schenkel (18) sich an der Wandung der Verankerungsnut (4) abstützt.

13. Verbindungsanordnung nach Anspruch 12, **dadurch gekennzeichnet, daß** der den Dichtungsring (5) untergreifende Schenkel sich aus Ringsegmenten (20) zusammensetzt.

14. Verbindungsanordnung nach Anspruch 13, **dadurch gekennzeichnet, daß** sie als geteilter in die Verankerungsnut (4) eingesetzter, den Dichtungsring nach außen drückender Spannring (21) ausgebildet ist

15. Verbindungsanordnung nach Anspruch 14, **dadurch gekennzeichnet, daß** sie als geteilter Formring (22) mit winkelförmigem Querschnitt ausgebildet ist und ein Schenkel (23) sich am Dichtungsring (5) abstützt und der andere Schenkel (24) in den Bewegungsbereich des einzuschiebenden Rohrendes (3) ragt.

16. Verbindungsanordnung nach Anspruch 15, **dadurch gekennzeichnet, daß** zu beiden Seiten des Dichtungsringes (5) in die Verankerungsnut (4) geteilte Spannringe (25) oder Formringe (26) eingesetzt sind.

17. Verbindungsanordnung nach Anspruch 16, **dadurch gekennzeichnet, daß** sie seitliche Anlagen (27, 28) für den Dichtungsring aufweist, die über eine eine Sollbruchstelle bildende dünne Wandung (29, 30) untereinander verbunden sind.

18. Verbindungsanordnung nach Anspruch 17, **dadurch gekennzeichnet, daß** sie aus zwei Hülsenteilen (33, 34) besteht, die über einen Sollbruchbereich (35) miteinander verbunden sind, dessen Breite der Breite des Dichtungsringes (5) entspricht.

19. Verbindungsanordnung nach Anspruch 18, **dadurch gekennzeichnet, daß** die Hülse (32) einen nach außen ragenden Ringflansch (37) aufweist, der mit der zugeordneten Stirnfläche (9) des Fittings (1) zusammenwirkt.

20. Verbindungsanordnung nach Anspruch 19, **dadurch gekennzeichnet, daß** der Ringflansch (37) mit einem achsparallelen Zapfen (38) ausgerüstet ist, der am Beginn der Trennung der Hülsenteile (33, 34) an der Stirnfläche (9) des Fittings (1) anliegt und sich während der Trennung nach außen aufstellt.

## Claims

1. Method for producing a press connection between a fitting and a pipe end, which is pushed into a socket, provided with a sealing ring, of the fitting as far as a stop, using a pressing tool engaging in the region of an annular bead of the fitting, the said annular bead partially holding the sealing ring, characterized in that prior to the pushing-in of the pipe end (3) or during the pushing-in of the pipe end (3) into the socket (2) of the fitting (1), the sealing ring (5) is elastically deformed in some areas starting from the inner contour in the radial direction over the outer circumference of the pipe end (3) by means of at least one inserted shaped part, the pipe end (3) is pushed in as far as the stop, the. cold deformation of the parts to be connected is undertaken and during the cold deformation the sealing ring is pressed onto the pipe end (3).

2. Method according to Claim 1, characterized in that one or more rings, ring segments, a sleeve, wedges or webs are used as the shaped part.

3. Method according to Claim 2, characterized in that the ring, the ring segments or webs which lift the sealing ring (5) off the outer surface of the pipe end (3) are introduced into the socket (3) of the fitting (1) until approximately in the central region of the sealing ring or shaped seal (5).

4. Method according to Claim 3, characterized in that during the pressing together of the fitting (1) and the pushed-in pipe end (3) approximately half of the sealing ring is directly pressed together with the pipe end.

5. Method according to Claim 2, characterized in that the sleeve (32) which is to be inserted into the socket (2) of the fitting (1) is supported by means of an inwardly extending annular flange (36) against the end side of the pipe end (3) and is first of all introduced together with the pipe end as far as a stop on the end side (9) of the fitting, then is separated in the region of the sealing ring and the front sleeve part (34) is moved into the socket (2) together with the pipe end (3) as far as a stop on the fitting (1).

6. Method according to Claim 5, characterized in that the separating region between, the sleeve parts (33, 34) corresponds to the width of the sealing ring (5) and the sealing ring is pressed over its entire width or virtually over its entire width together with the pipe end (3).

7. Method according to Claim 1, characterized in that the shaped part which is inserted into the socket (2) of the fitting (1) protrudes, supporting itself against part of the inner contour of the sealing ring (5), into the region of movement of the pipe end (3) to be introduced, and during introduction of the pipe end (3) the sealing ring (5) is moved out of the region of movement of the pipe end.

8. Connecting arrangement for carrying out the method according to one of Claims 1 to 7, having a fitting (1) and a pipe, end (3) which is pushed into a socket, provided with a sealing ring (5), of the fitting (1) as far as a stop, characterized in that in order to protect the sealing ring (5) as the pipe end (3) is being pushed in, at least one inserted shaped part is provided which elastically deforms the sealing ring (5) in some areas in the radial direction over the outer circumference of the pipe end (3).

9. Connecting arrangement according to Claim 8, characterized in that an annular flange (10) is supported on the end surface (9) of the fitting (1) and from the said annular flange extend annular segments (11) which engage with a raised edge (12) in the securing groove (4) of the fitting for the sealing ring (5) and bear against the groove inner surface, and in that thin-walled tongues radiate from the raised edge, the said tongues gripping up to half of the sealing ring (5) from below.

10. Connecting arrangement according to Claim 9, characterized in that the annular segments (11) bear against the inner surface of the socket (2) of the fitting (1) and against the outer surface of the pipe end (3).

11. Connecting arrangement according to Claim 10, characterized in that it has an annular flange (15) which is supported against the end surface (9) of the fitting (1) and from which extend webs which are supported against the inner contour of the sealing ring (5) in a region of up to half the ring width, and in interaction with the sealing ring (5) protrude into the region of movement of the pipe end (3) to be inserted.

12. Connecting arrangement according to Claim 11, characterized in that it is designed as a divided ring (17) which is inserted into the securing groove (4) of the sealing ring (5) and in cross section has two limbs (18, 19) which form an obtuse angle and one limb (19) of which grips up to half of the sealing ring (5) from below and the other limb (18) is supported against the wall of the securing groove (4).

13. Connecting arrangement according to Claim 12, characterized in that the limb which grips the sealing ring (5) from below is composed of annular segments (20).

14. Connecting arrangement according to Claim 13, characterized , in that it is designed as a divided clamping ring (21) which is inserted into the securing groove (4) and presses the sealing ring outwards.

15. Connecting arrangement according to Claim 14, characterized in that it is designed as a divided shaped ring (22) having an angular cross section, and one limb (23) is supported against the sealing ring (5) and the other limb (24) protrudes into the region of movement of the pipe end (3) to be pushed in.

16. Connecting arrangement according to Claim 15, characterized that on both sides of the sealing ring (5) divided clamping rings (25) or shaped rings (26) are inserted into the securing groove (4).

17. Connecting arrangement according to Claim 16, characterized in that it has lateral bearing surfaces (27, 28) for the sealing ring, the said bearing surfaces being connected to one another via a thin wall (29, 30) forming a predetermined breaking point.

18. Connecting arrangement according to Claim 17, characterized in that it comprises two sleeve parts (33, 34) which are connected to one another via a predetermined breaking region (35) whose width corresponds to the width of the sealing ring (5).

19. Connecting arrangement according to Claim 18, characterized in that the sleeve (32) has an outwardly protruding annular flange (37) which interacts with the assigned end surface (9) of the fitting (1).

20. Connecting arrangement according to Claim 19, characterized in that the annular flange (37) is equipped with an axially parallel peg (38) which, at the beginning of the separation of the sleeve parts (33, 34), bears against the end surface (9) of the fitting (1) and during the separation is raised up outwards.

## Revendications

1. Procédé de fabrication d'une liaison pressée entre un raccord et une extrémité de tube introduite dans un logement du raccord, pourvu d'une bague d'étanchéité, jusqu'à une butée, par utilisation d'un outil de compression agissant dans la zone d'un bourrelet annulaire du raccord, qui loge partiellement la bague d'étanchéité, caractérisé en ce qu'avant d'introduire l'extrémité de tube (3) ou pendant l'introduction de l'extrémité de tube (3) dans le logement (2) du raccord (1), la bague d'étanchéité (5) est déformée élastiquement dans la direction radiale, depuis le contour intérieur, par endroits sur le pourtour extérieur de l'extrémité de tube (3), par au moins un élément profilé inséré, en ce que l'extrémité de tube (3) est introduite jusqu'à la butée, en ce qu'il est procédé à la déformation à froid des pièces à relier et en ce que lors de la déformation à froid, la bague d'étanchéité est pressée sur l'extrémité de tube (3).

2. Procédé selon la revendication 1, caractérisé en ce qu'on utilise comme élément profilé une ou plusieurs bagues, des segments annulaires, une douille, des coins ou des pattes.

3. Procédé selon la revendication 2, caractérisé en ce que la bague, les segments annulaires ou les pattes, qui soulèvent la bague d'étanchéité (5) de la surface extérieure de l'extrémité de tube (3), sont introduits approximativement jusque dans la zone centrale de la bague d'étanchéité ou de la garniture d'étanchéité profilée (5) dans le logement (3) du raccord (1).

4. Procédé selon la revendication 3, caractérisé en ce qu'approximativement une moitié de la bague d'étanchéité est directement pressée avec l'extrémité de tube, pendant le pressage du raccord (1) avec l'extrémité de tube (3) introduite.

5. Procédé selon la revendication 2, caractérisé en ce que la douille (32), à insérer dans le logement (2) du raccord (1), prend appui, par une bride annulaire (36) qui s'étend vers l'intérieur, contre la face frontale de l'extrémité de tube (3) et est introduite d'abord avec l'extrémité de tube jusqu'à une butée sur la face frontale (9) du raccord, puis est séparée dans la zone de la bague d'étanchéité et la partie de douille avant (34) est déplacée dans le logement (2), jusqu'à une butée sur le raccord (1).

6. Procédé selon la revendication 5, caractérisé en ce que la zone de séparation entre les parties de douille (33, 34) correspond à la largeur de la bague d'étanchéité (5), et en ce que la bague d'étanchéité est pressée sur toute sa largeur ou approximativement sur toute sa largeur avec l'extrémité de tube (3).

7. Procédé selon la revendication 1, caractérisé en ce que l'élément profilé, inséré dans le logement (2) du raccord (1), pénètre, en prenant appui contre une partie du contour intérieur de la bague d'étanchéité (5), dans la zone de déplacement de l'extrémité de tube (3) à introduire, et en ce que la bague d'étanchéité (5) est déplacée de la zone de déplacement de l'extrémité de tube (3), pendant l'introduction de ce dernier.

8. Agencement de liaison pour la mise en oeuvre du procédé selon l'une des revendications 1 à 7, comportant un raccord (1) et une extrémité de tube (3) introduite jusqu'à une butée, dans un logement du raccord (1), pourvu d'une bague d'étanchéité (5), caractérisé en ce que pour la protection de la bague d'étanchéité (5) pendant l'introduction de l'extrémité de tube (3), il est prévu au moins un élément profilé introduit, qui déforme élastiquement dans la direction radiale la bague d'étanchéité (5), par endroits, sur le pourtour extérieur de l'extrémité de tube (3).

9. Agencement de liaison selon la revendication 8, caractérisé en ce qu'une bride annulaire (10) prend appui contre la face frontale (9) du raccord (1), bride annulaire depuis laquelle s'étendent des segments annulaires (11) qui s'engagent, par une pliure (12), dans la rainure d'ancrage (4) du raccord pour la bague d'étanchéité (5), et s'appliquent contre la surface intérieure de la rainure, et en ce que de la pliure partent des languettes à paroi mince, qui passent sous la bague d'étanchéité (5) jusqu'à la moitié de celle-ci.

10. Agencement de liaison selon la revendication 9, caractérisé en ce que les segments annulaires (11) s'appliquent contre la surface intérieure du logement (2) du raccord (1) et contre la surface extérieure de l'extrémité de tube (3).

11. Agencement de liaison selon la revendication 10, caractérisé en ce qu'il comporte une bride annulaire (15), qui prend appui contre la face frontale (9) du raccord (1) et depuis laquelle s'étendent des pattes qui prennent appui contre le contour Intérieur de la bague d'étanchéité (5), dans une zone s'étendant jusqu'à la moitié de la largeur de la bague, et qui, en coopération avec la bague d'étanchéité (5), sont déformées dans la zone de déplacement de l'extrémité de tube (3) à insérer.

12. Agencement de liaison selon la revendication 11, caractérisé en ce qu'il est conformé en bague (17) fendue, insérée dans la rainure d'ancrage (4) de la bague d'étanchéité (5) et qui présente, dans sa section transversale, deux branches (18, 19) qui forment un angle obtus, et dont une branche (19) passe sous la moitié de la bague d'étanchéité (5) et l'autre branche (18) prend appui contre la paroi de la rainure d'ancrage (4).

13. Agencement de liaison selon la revendication 12, caractérisé en ce que la branche qui passe sous la bague d'étanchéité (5) se compose de segments annulaires (20).

14. Agencement de liaison selon la revendication 13, caractérisé en ce qu'il est conformé en bague de serrage (21) fendue, qui est insérée dans la rainure d'ancrage (4) et qui presse la bague d'étanchéité vers l'extérieur.

15. Agencement de liaison selon la revendication 14, caractérisé en ce qu'il est conformé en bague profilée (22) fendue, avec section transversale de forme angulaire et en ce qu'une branche (23) prend appui contre la bague d'étanchéité (5), tandis que l'autre branche (24) pénètre dans la zone de déplacement de l'extrémité de tube (3) à introduire.

16. Agencement de liaison selon la revendication 15, caractérisé en ce que des bagues de serrage (25) ou des bagues profilées (26) fendues sont insérées dans la rainure d'ancrage (4), des deux côtés de la bague d'étanchéité (5).

17. Agencement de liaison selon la revendication 16, caractérisé en ce qu'il comporte des appuis latéraux (27, 28) pour la bague d'étanchéité, qui sont reliés entre eux par une mince paroi (29, 30) formant un point destiné à la rupture.

18. Agencement de liaison selon la revendication 17, caractérisé en ce qu'il est constitué de deux parties de douille (33, 34), qui sont reliées entre elles par une zone destinée à la rupture (35), dont la largeur correspond à celle de la bague d'étanchéité (5).

19. Agencement de liaison selon la revendication 18, caractérisé en ce que la douille (32) présente une bride annulaire (37) dépassant vers l'extérieur, qui coopère avec la face frontale (9) correspondante du raccord (1).

20. Agencement de liaison selon la revendication 19, caractérisé en ce que la bride annulaire (37) est pourvue d'un tenon (38) parallèle à l'axe, qui s'applique, au début de la séparation des parties de douille (33, 34), contre la face frontale (9) du raccord (1), et qui s'oriente vers l'extérieur pendant la séparation.
